# EUROPÄISCHE PATENTSCHRIFT

(11) **EP 1 281 602 B1**
(45) Veröffentlichungstag und Bekanntmachung des Hinweises auf die Patenterteilung: **27.09.2006**
(21) Anmeldenummer: 02013865.7
(22) Anmeldetag: 22.06.2002
(51) Int. Cl.: B62D 33/02, B62D 21/12, B62D 21/00

(54) **Tragrahmen für ein Kraftfahrzeug**
Frame for a motor vehicle
Châssis pour véhicule automobile

(30) Priorität: 31.07.2001 DE 10137379
(43) Veröffentlichungstag der Anmeldung: 05.02.2003
(73) Patentinhaber: DaimlerChrysler AG, 70567 Stuttgart (DE)
(72) Erfinder: Martin, Gerd, 70327 Stuttgart (DE)

(56) Entgegenhaltungen:
- EP-A- 0 591 727
- WO-A-01/23245
- FR-A- 982 040
- GB-A- 511 518

## Beschreibung

Die Erfindung betrifft einen Tragrahmen für ein Kraftfahrzeug, insbesondere für ein Nutzfahrzeug, mit den Merkmalen des Oberbegriffs des Anspruchs 1.

Ein derartiger Tragrahmen ist aus der FR-A-982 040 bekannt und umfasst zwei Längsträger, die über wenigstens einen Querträger miteinander verbunden sind und die jeweils aus einem Obergurt und einem Untergurt sowie wenigstens aus einem Obergurt und Untergurt verbindenden vertikalen Steg bestehen. Dabei ist wenigstens ein Längsabschnitt des Tragrahmens als Versteifungsabschnitt ausgebildet, dem zwei Stege und zwei Querträger, nämlich ein oberer Querträger und ein unter Querträger zugeordnet sind. Der obere Querträger ist einerseits mit dem Obergurt und dem Steg des einen Längsträgers und andererseits mit dem Obergurt und dem Steg des anderen Längsträgers verbunden. Außerdem ist der unterer Querträger einerseits mit dem Untergurt und dem Steg des eines Längsträgers und andererseits mit dem Untergurt und dem Steg des anderen Längsträgers verbunden. Beim bekannten Tragrahmen sind die einzelnen Träger, Stege und Gurte aus Rohrprofilen zusammengebaut.

Aus der DE 197 50 981 A1 ist ein Tragrahmen bekannt, der zwei in Fahrzeuglängsrichtung parallel zueinander verlaufende Längsträger besitzt, die jeweils aus einem Obergurt und einem Untergurt sowie mehreren vertikalen Stegen zusammengebaut sind, wobei die Stege den Obergurt mit dem Untergurt verbinden. Zur Vervollständigung des Tragrahmens sind die beiden Längsträger über mehrere Querträger miteinander verbunden. Beim bekannten Tragrahmen sind die Querträger an einem anderen Längsabschnitt der Längsträger angeordnet als die Stege.

Die wichtigsten Vorteile eines derartigen Tragrahmens werden darin gesehen, dass der Tragrahmen durch Auswahl und Kombination von Gurten, Stegen und Querträgern, die sich hinsichtlich ihrer Steifigkeitswerte voneinander unterscheiden, an sehr unterschiedliche Anwendungsformen, die sich beispielsweise bezüglich der Steifigkeit, insbesondere Verwindungssteifigkeit, voneinander unterscheiden, mit einem relativ geringen Aufwand angepaßt werden kann.

Die vorliegende Erfindung beschäftigt sich mit dem Problem, für einen Tragrahmen der eingangs genannten Art eine Bauweise anzugeben, die mit konstruktiv einfachen Maßnahmen eine Erhöhung der Verwindungssteifigkeit des Tragrahmens bei gleichzeitig relativ leichter Bauweise ermöglicht.

Dieses Problem wird erfindungsgemäß durch einen Tragrahmen mit den Merkmalen des Anspruchs 1 gelöst.

Die Erfindung beruht auf dem allgemeinen Gedanken, in einem Längsträgerabschnitt die vier Gurte, nämlich Ober- und Untergurt links und rechts, quasi in einer senkrecht zur Fahrzeuglängsrichtung verlaufenden Ebene mit zwei Stegen und zwei Querträgern miteinander zu verbinden, wodurch ein umlaufend geschlossener Versteifungsabschnitt ausgebildet wird, dessen hohe Steifigkeitswerte unter anderem darauf zurückzuführen sind, dass die Querträger erfindungsgemäß sowohl mit den jeweiligen Gurten als auch mit den Stegen verbunden sind. In der Ebene, in der sich die Stege und Querträger erstrecken, besitzt der Versteifungsabschnitt somit eine besonders hohe Verwindungssteifigkeit. Folglich besitzt auch der damit ausgestattete Tragrahmen in jedem mit einem derartigen Versteifungsabschnitt ausgestatteten Längsabschnitt eine entsprechend hohe Verwindungssteifigkeit. Je mehr derartige Versteifungsabschnitte vorgesehen sind und je geringer der in Fahrzeuglängsrichtung gemessene Längsabstand benachbarter Versteifungsabschnitte gewählt ist, desto höher ist die Steifigkeit des gesamten Tragrahmens.

Entsprechend der Erfindung weist der Querträger im Bereich seiner Enden quer abstehende Verbindungsabschnitte auf, über die der Querträger an den jeweiligen Stegen und/oder an den jeweiligen Gurten angebaut ist. Durch diese Verbindungsabschnitte kann die Steifigkeit des Versteifungsabschnitts zusätzlich deutlich erhöht werden.

Bei der Erfindung ist außerdem der Querträger mit einem L-förmigen Querschnitt versehen, was die Leichtbauweise und die Verwindungssteifigkeit des Tragrahmens unterstützt.

Bevorzugt wird eine Ausführungsform, bei der Obergurt und Untergurt des linken Längsträgers sowie Obergurt und Untergurt des rechten Längsträgers baugleich ausgebildet sind. Des weiteren ist es zweckmäßig im Versteifungsabschnitt den oberen Querträger und den unteren Querträger baugleich auszubilden. Bevorzugt wird eine Ausführungsform, bei der im Versteifungsabschnitt der Steg des linken Längsträgers und der Steg des rechten Längsträgers baugleich ausgestaltet sind. Durch diese Maßnahmen werden preiswerte Gleichteile erreicht, wodurch der Tragrahmen in seinen verschiedenen Varianten relativ preiswert realisierbar ist. Die einzelnen Tragrahmenvarianten unterscheiden sich durch die Anzahl und Positionierung der Versteifungsabschnitte, wodurch die gewünschten Steifigkeitswerte für den Tragrahmen erzielbar sind.

Von besonderer Bedeutung ist eine Ausführungsform bei der die Gurte und/oder die Streben einen L-förmigen Querschnitt aufweisen und insbesondere als abgekantete Blechformteile ausgebildet sind. Mit Hilfe der L-Profile können die gewünschten Steifigkeitswerte relativ preiswert erreicht werden. Desweiteren lassen sich abgekantete Blechformteile vergleichsweise preiswert herstellen, insbesondere preiswerter als Strangpreßteile.

Gemäß einer besonderen Weiterbildung kann an wenigstens einem der Querträger an wenigstens einem seiner Enden ein Stützarm ausgebildet sein, der seitlich am Steg abgestützt ist und in Längsrichtung des Querträgers zwischen den Gurten über den je weiligen Längsträger auskragt. An einem derartigen Stützarm können Aggregate, Behälter, Geräte oder dergleichen des Fahrzeugs montiert werden.

Vorteilhaft ist dabei eine Weiterbildung, bei der der jeweilige Stützarm so am Steg abgestützt ist, dass er sich bei einer Vertikallast über Scherkräfte am Steg abstützt. Diese Bauweise ermöglicht die Abstützung sehr viel höherer Vertikallasten am Tragrahmen, als dies beispielsweise bei einem über einen Winkel am Längsträger befestigten Stützarm möglich ist, der bei einer Vertikalbelastung im Winkel auf Biegung beansprucht wird. Eine weitere Besonderheit wird außerdem darin gesehen, dass die Einleitung der vertikalen Kräfte bei dieser Ausführungsform im Versteifungsabschnitt erfolgt, also genau dort, wo der Tragrahmen seine höchste Tragfähigkeit besitzt.

Bei einer zweckmäßigen Weiterbildung kann der Stützarm einstückig mit dem Querträger hergestellt sein. Bei dieser Bauweise können zusätzliche Befestigungsmaßnahmen zum Festlegen des Stützarms am Querträger bzw. am Steg entfallen.

Weitere wichtige Merkmale und Vorteile der vorliegenden Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Es zeigen, jeweils schematisch,
- Fig. 1: eine perspektivische Ansicht auf einen Längsabschnitt eines Tragrahmens nach der Erfindung bei einer ersten Ausführungsform,
- Fig. 2: eine Ansicht wie in Fig. 1, jedoch bei einer zweiten Ausführungsform, und
- Fig. 3: eine Ansicht wie Fig. 1, jedoch bei einer dritten Ausführungsform.

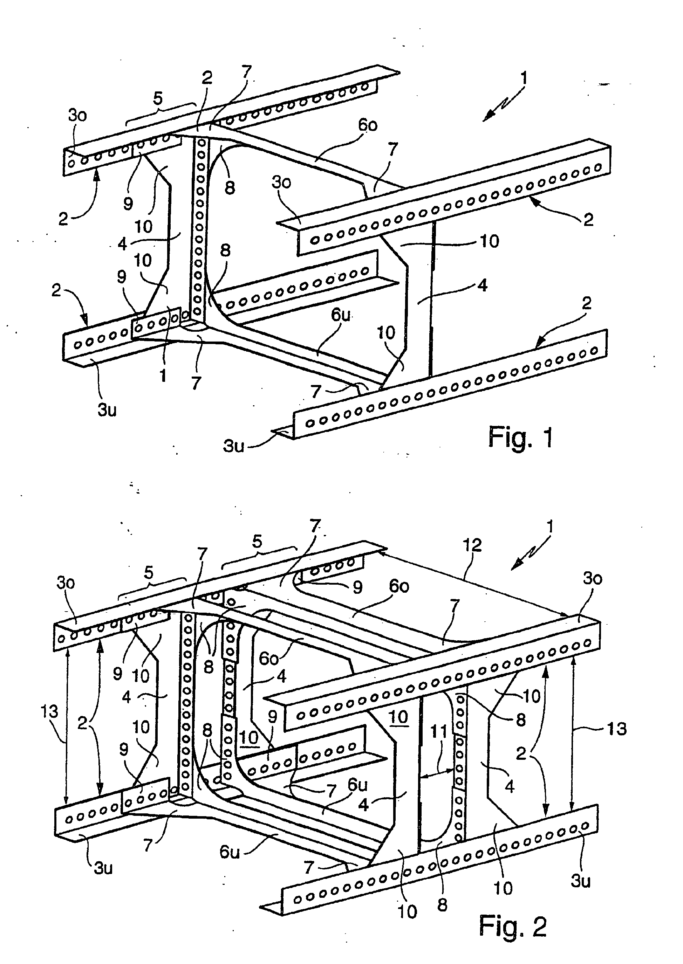

Entsprechend den Fig. 1 bis 3 weist ein erfindungsgemäßer Tragrahmen 1 eines im übrigen nicht gezeigten Kraftfahrzeugs, insbesondere Nutzfahrzeugs, zwei zueinander parallel verlaufende Längsträger 2 auf, die parallel zu einer Fahrzeuglängsrichtung verlaufen und bezüglich einer horizontalen Fahrzeugquerrichtung voneinander beabstandet sind. Die beiden Längsträger 2 sind als gebaute Längsträger 2 ausgebildet und sind jeweils aus zwei Gurten 3, nämlich aus einem Obergurt 3o und einem Untergurt 3u, zusammengesetzt, die mittels vertikaler Streben 4 miteinander verbunden sind.

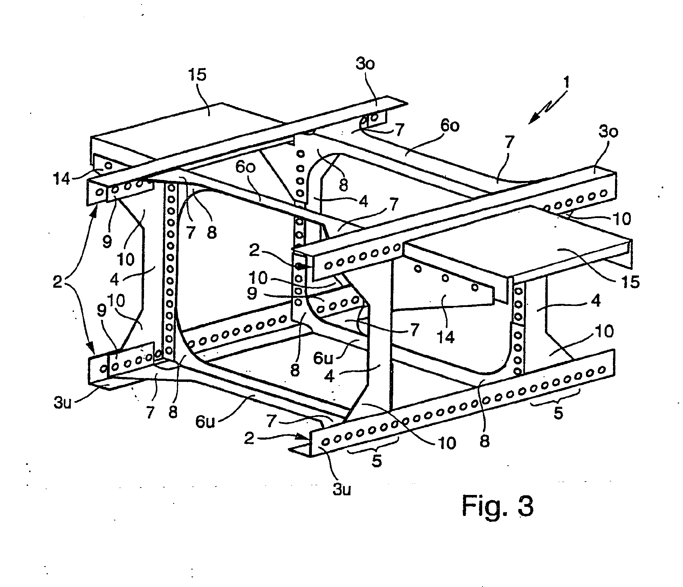

Erfindungsgemäß ist dabei wenigstens ein Längsabschnitt des Tragrahmens 1 als Versteifungsabschnitt ausgebildet, der in den Fig. durch eine geschweifte Klammer gekennzeichnet und mit 5 bezeichnet ist. Während bei der Ausführungsform gemäß Fig. 1 in dem dargestellten Ausschnitt des Tragrahmens 1 nur ein solcher Versteifungsabschnitt 5 ausgebildet ist, sind die Ausführungsformen der Fig. 2 und 3 im dargestellten Abschnitt des Tragrahmens 1 jeweils mit zwei derartigen Versteifungsabschnitten 5 ausgestattet.

In jedem Versteifungsabschnitt 5 ist bei beiden Längsträgern 2 jeweils eine Strebe 4 vorgesehen, so dass sich die beiden Streben 4 innerhalb des Versteifungsabschnitts 5 gegenüberliegen. In diesem Versteifungsabschnitt 5 sind außerdem zwei Querträger 6, nämlich ein oberer Querträger 6o und ein unterer Querträger 6u, vorgesehen, die innerhalb des Versteifungsabschnitts 5 einander gegenüberliegend angeordnet sind. Der obere Querträger 6o ist auf der einen Seite mit dem Obergurt 3o und mit der Strebe 4 des einen Längsträgers 2 und auf der anderen Seite mit dem Obergurt 3o und der Strebe 4 des anderen Längsträgers 2 verbunden. In entsprechender Weise ist der untere Querträger 6u an der einen Seite am Untergurt 3u und an der zugehörigen Strebe 4 des einen Längsträgers 2 und an der gegenüberliegenden Seite am Untergurt 3u und an der zugehörigen Strebe 4 des anderen Längsträgers 2 befestigt. Die Anordnung der Streben 4 und der Querträger 6 jedes Versteifungsabschnitts 5 ist dabei so gewählt, dass die Längsrichtung der Querträger 6 sowie der Streben 4 jeweils im wesentlichen in einer Ebene liegen, die sich senkrecht zur Rahmenlängsrichtung ausbreitet.

Für besonders hohe Steifigkeitswerte sind an den Querträgern 6 im Bereich ihrer Enden quer abstehende Verbindungsabschnitte 7 und 8 ausgebildet, über die die Anbindung an die Gurte 3 (Verbindungsabschnitt 7) sowie an die Stege 4 (Verbindungsabschnitt 7 und Verbindungsabschnitt 8) erfolgt. Durch die vom Querträger 6 quer abstehenden Verbindungsabschnitte 7 und 8 können insbesondere auch Momente übertragen werden, wodurch sich die Verwindungssteifigkeit des Tragrahmens 1 erhöht. Die einen Verbindungsabschnitte 7 sind außerdem mit abgewinkelten Endabschnitten 9 ausgestattet, über welche die Anbindung des Querträgers 6 an die Gurte 3 erfolgt.

Auch die Streben 4 sind mit derartigen Verbindungsabschnitten 10 ausgestattet, die an den Enden der Streben 4 quer von der jeweiligen Strebe 4 abstehen und die Übertragung von Momenten zwischen der Strebe 4 und den daran angeschlossenen Gurten 3o und 3u verbessert. Zur Erzielung einer besonders kompakten Bauweise sind die Verbindungsabschnitte 10 der Streben 4 zwischen dem jeweiligen Gurt 3 und dem damit verbunden Verbindungsabschnitt 7 bzw. mit dem daran ausgebildeten, daran abgewinkelten Endabschnitt 9 des jeweiligen Querträgers 6 angeordnet. Mit anderen Worten, die Verbindungsabschnitte 7 bzw. deren Endabschnitte 9 sind unter Zwischenschaltung der Verbindungsabschnitte 10 am jeweiligen Gurt 3 befestigt.

Die Befestigungen der einzelnen Rahmenbestandteile aneinander können beispielsweise mittels Verschraubungen durchgeführt werden, wobei vorzugsweise an den einzelnen Bestandteilen, also an den Gurten 3, den Streben 4 und an den Querträgern 6, ein gerastertes Lochmuster für die Schraubendurchführung ausgebildet ist. Auf diese Weise kann die Längspositionierung der einzelnen Versteifungsabschnitte 5 relativ einfach variiert werden. Alternativ oder zusätzlich können auch andere Verbindungstechniken, wie z.B. Schweißverbindungen, zur Anwendung kommen.

Die Gurte 3, die Querträger 6 und die Streben 4 besitzen vorzugsweise einen L-förmigen Querschnitt und verfügen somit bei relativ geringem Gewicht über relativ hohe Steifigkeitswerte. Vorzugsweise sind die Gurte 3, die Streben 4 und die Querträger 6 als abgekantete Blechformteile ausgebildet, wodurch deren Herstellung besonders preiswert ist.

Wie aus den Fig. 1 bis 3 hervorgeht, sind sämtliche Gurte 3, nämlich der linke Obergurt 3o, der linke Untergurt 3u, der rechte Obergurt 3o und der rechte Untergurt 3u, völlig identisch bzw. baugleich ausgebildet. Ebenso sind die Streben 4, also die Streben 4 des linken Längsträgers 2 sowie die Streben 4 des rechten Längsträgers 2, baugleich oder identisch ausgebildet. Des weiteren sind auch die Querträger 6, nämlich die unteren Querträger 6u und die oberen Querträger 60, identisch oder baugleich gestaltet (abgesehen von der speziellen Ausführungsform gemäß Fig. 3). Diese Vereinheitlichung der einzelnen Komponenten des Tragrahmens 1 trägt deutlich zur Senkung der Herstellungskosten bei.

In dem in Fig. 1 gezeigten Rahmenabschnitt ist nur ein Versteifungsabschnitt 5 vorgesehen; diese Konfiguration wird auch als "offenes Profil" bezeichnet.

Bei den Ausführungsformen der Fig. 2 und 3 sind in dem gezeigten Ausschnitt des Tragrahmens 1 zwei solche Versteifungsabschnitte 5 vorgesehen, die in Längsrichtung des Tragrahmens 1 einen relativ kleinen Längsabstand 11 voneinander aufweisen. Dieser Längsabstand 11 ist jedenfalls kleiner als ein in Querrichtung des Tragrahmens 1 gemessener Querabstand 12 zwischen den Längsträgern 2; insbesondere ist dieser Längsabstand 11 außerdem kleiner als ein in Vertikalrichtung gemessener Vertikalabstand 13 zwischen Obergurt 3o und Untergurt 3u der Längsträger 2.

Die beiden benachbarten Versteifungsabschnitte 5 sind bezüglich einer vertikalen Querebene, die sich zwischen den beiden Versteifungsabschnitten 5 erstreckt, spiegelsymmetrisch ausgebildet. Diese Bauweise ermöglicht im Hinblick auf die Verbindungsabschnitte 7, 8 und 10 besonders hohe Versteifungswerte innerhalb eines relativ kurzen Längsabschnitts des Tragrahmens 1.

Durch die Baugleichheit der einzelnen Elemente ist jeder Versteifungsabschnitt 5 der Fig. 1 bis 3 bezüglich einer vertikalen Längsebene, die sich zwischen den Längsträgern 2 erstreckt, spiegelsymmetrisch ausgebildet. Außerdem sind die Versteifungsabschnitte 5 bei den Ausführungsformen der Fig. 1 und 2 bezüglich einer horizontalen Längsebene, die sich zwischen den Obergurten 3o und den Untergurten 3u erstreckt, spiegelsymmetrisch ausgebildet. Der Zusammenbau des Tragrahmens 1 wird durch diese Ausgestaltung besonders einfach.

Entsprechend Fig. 3 kann bei zwei benachbarten Versteifungsabschnitten 5 jeweils der obere Querträger 6o auf beiden Seiten bzw. an beiden Enden jeweils mit einem Stützarm 14 versehen sein, der insbesondere einstückig mit dem jeweiligen Querträger 6o hergestellt ist. Ebenso ist eine Ausführungsform möglich, bei der die Stützarme 14 als separate Bauteile ausgebildet sind, die zusätzlich, insbesondere nachträglich, montierbar sind. Bei der letztgenannten Bauweise kann die Baugleichheit zwischen den oberen Querträger 6o und den unteren Querträgern 6u beibehalten werden.

Die Stützarme 14 sind in Längsrichtung des oberen Querträgers 60 zwischen den Streben 4 der benachbarten Versteifungsabschnitte 5 und zwischen den Gurten 3 des jeweiligen Längsträgers 2 hindurchgeführt, so dass sie in Längsrichtung des oberen Querträgers 6, also quer zum jeweiligen Längsträger 2 auskragen. Dabei sind die Stützarme 14 seitlich am jeweils benachbarten Steg 4 abgestützt. Diese Abstützung erfolgt dabei über die Verschraubung des oberen Querträgers 6o mit dem jeweiligen Steg 4. Diese Verbindung hat zur Folge, dass sich Vertikalkräfte, die an den Stützarmen 14 angreifen, über Scherkräfte am jeweiligen Steg 4 abstützen. Sofern durch geeignete Maßnahmen ein Wegknicken oder Beulen des jeweiligen Stützarms 14 in Rahmenlängsrichtung verhindert wird, können durch diese Anbindung erheblich größere Vertikallasten am Tragrahmen 1 abgestützt werden, als dies beispielsweise bei einem am Längsträger 2 angeflanschten Winkelträger möglich ist, der bei einer Vertikallast im Winkel auf Biegung beansprucht wird.

Bei der Ausführungsform gemäß Fig. 3 stützen die benachbarten Stützarme 14 jeder Rahmenseite eine Konsole 15 ab, wodurch sich die Seitenstabilität der Stützarme 14 erhöht. An den Stützarmen 14 bzw. an den Konsolen 15 können beliebige Aggregate, Geräte, Ausrüstungsgegenstände, Behälter, wie z.B. ein Luftbalg der Fahrzeugfederung, eine Fahrzeugbatterie, ein Kraftstofftank, ein Staubehälter, gehaltert werden. Von besonderer Bedeutung ist hierbei, dass die Stützarme 14 genau dort am Tragrahmen 1 angreifen, wo dieser aufgrund der Versteifungsabschnitte 5 seine größte Steifigkeit und Stabilität besitzt. Dementsprechend sind die Stützarme 14 bzw. die Konsolen 15 besonders hoch belastbar.

## Patentansprüche

1. Tragrahmen für ein Kraftfahrzeug, insbesondere Nutzfahrzeug,
- mit zwei Längsträgern (2), die über wenigstens einen Querträger (6) miteinander verbunden sind und die jeweils aus einem Obergurt (3o) und einem Untergurt (3u) sowie wenigstens aus einem Obergurt (3o) und Untergurt (3u) verbindenden vertikalen Steg (4) bestehen,
- wobei wenigstens ein Längsabschnitt des Tragrahmens (1) als Versteifungsabschnitt (5) ausgebildet ist, dem zwei Stege (4) und zwei Querträger (6), nämlich ein oberer Querträger (60) und ein unterer Querträger (6u), zugeordnet sind,
- wobei der obere Querträger (60) einerseits mit dem Obergurt (3o) und dem Steg (4) des einen Längsträgers (2) und andererseits mit dem Obergurt (3o) und dem Steg (4) des anderen Längsträgers (2) verbunden ist,
- wobei der untere Querträger (6u) einerseits mit dem Untergurt (3u) und dem Steg (4) des einen Längsträgers (2) und andererseits mit dem Untergurt (3u) und dem Steg (4) des anderen Längsträgers (2) verbunden ist,
**dadurch gekennzeichnet,**
- **dass** der Querträger (6) einen L-förmigen Querschnitt aufweist,
- **dass** der Querträger (6) im Bereich seiner Enden quer abstehende erste Verbindungsabschnitte (7) aufweist, über die der Querträger (6) an den jeweiligen Steg (4) und an den jeweiligen Gurt (3) angebaut ist,
- **dass** der Querträger (6) im Bereich seiner Enden quer abstehende zweite Verbindungsschnitte (8) aufweist, über die der Querträger (6) an den jeweiligen Steg (4) angebaut ist.

2. Tragrahmen nach Anspruch 1,
**dadurch gekennzeichnet,**
**dass** der Obergurt (3o) des einen Längsträgers (2), der Untergurt (3u) des einen Längsträgers (2), der Obergurt (3o) des anderen Längsträgers (2) und der Untergurt (3u) des anderen Längsträgers (2) baugleich sind, dass im Versteifungsabschnitt (5) der obere Querträger (60) und der untere Querträger (6u) baugleich sind und dass im Versteifungsabschnitt (5) der Steg (4) des einen Längsträgers (2) und der Steg (4) des anderen Längsträgers (2) baugleich sind.

3. Tragrahmen nach Anspruch 1 oder 2,
**dadurch gekennzeichnet,**
**dass** die Gurte (3) und/oder die Streben (4) einen L-förmigen Querschnitt aufweisen.

4. Tragrahmen nach einem der Ansprüche 1 bis 3,
**dadurch gekennzeichnet,**
**dass** die Gurte (3) und/oder die Streben (4) und/oder die Querträger (6) als abgekantete Blechformteile ausgebildet sind.

5. Tragrahmen nach einem der Ansprüche 1 bis 4,
**dadurch gekennzeichnet,**
**dass** an wenigstens einem der Querträger (60) an wenigstens einem seiner Enden ein Stützarm (14) ausgebildet ist, der seitlich am Steg (4) abgestützt ist und in Längsrichtung des Querträgers (60) zwischen den Gurten (3) über den jeweiligen Längsträger (2) auskragt.

6. Tragrahmen nach Anspruch 5,
**dadurch gekennzeichnet,**
**dass** der Stützarm (14) so am Steg (4) abgestützt ist, dass er sich bei einer Vertikallast über Scherkräfte am Steg (4) abstützt.

7. Tragrahmen nach Anspruch 5 oder 6,
**dadurch gekennzeichnet,**
**dass** der Stützarm (14) einstückig mit dem Querträger (30) hergestellt ist.

8. Tragrahmen nach einem der Ansprüche 5 bis 7,
**dadurch gekennzeichnet,**
**dass** zwei benachbarte Stützarme (14) zweier benachbarter Querträger (3o) eine Konsole (15) abstützen, die zur Halterung eines Aggregats oder dergleichen des Fahrzeugs dient.

9. Tragrahmen nach einem der Ansprüche 1 bis 8,
**dadurch gekennzeichnet,**
**dass** zwei benachbarte Versteifungsabschnitte (5) in Längsrichtung einen relativ kleinen Längsabstand (11) voneinander aufweisen, wobei die beiden Versteifungsabschnitte (5) bezüglich einer vertikalen Querebene spiegelsymmetrisch ausgebildet sind.

10. Tragrahmen nach Anspruch 9,
**dadurch gekennzeichnet,**
**dass** der Längsabstand (11) der beiden Versteifungsabschnitte (5) kleiner ist als ein in Querrichtung gemessener Querabstand (12) zwischen den Längsträgern (2) oder kleiner ist als ein in Vertikalrichtung gemessener Vertikalabstand (13) zwischen Obergurt (3o) und Untergurt (3u) eines der Längsträger (2).

## Claims

1. Supporting frame for a motor vehicle, in particular commercial vehicle,
- with two longitudinal members (2) which are connected to each other via at least one cross member (6) and which each comprise a top chord (30) and a bottom chord (3u) and at least one vertical web (4) connecting top chord (30) and bottom chord (3u),
- at least one longitudinal section of the supporting frame (1) being designed as a stiffening section (5) which is assigned two webs (4) and two cross members (6), namely an upper cross member (6o) and a lower cross member (6u),
- the upper cross member (6o) being connected, on the one hand, to the top chord (3o) and the web (4) of the one longitudinal member (2) and, on the other hand, to the top chord (3o) and the web (4) of the other longitudinal member (2),
- the lower cross member (6u) being connected, on the one hand, to the bottom chord (3u) and the web (4) of the one longitudinal member (2) and, on the other hand, to the bottom chord (3u) and the web (4) of the other longitudinal member (2),
**characterized**
- **in that** the cross member (6) has an L-shaped cross section,
- **in that** the cross member (6) has, in the region of its ends, transversely protruding, first connecting sections (7) via which the cross member (6) is mounted onto the respective web (4) and onto the respective chord (3),
- **in that** the cross member (6) has, in the region of its ends, transversely protruding, second connecting sections (8) via which the cross member (6) is mounted onto the respective web (4).

2. Supporting frame according to Claim 1, **characterized in that** the top chord (30) of the one longitudinal member (2), the bottom chord (3u) of the one longitudinal member (2), the top chord (30) of the other longitudinal member (2) and the bottom chord (3u) of the other longitudinal member (2) are identical in construction, **in that** in the stiffening section (5) the upper cross member (60) and the lower cross member (6u) are identical in construction, and **in that** in the stiffening section (5) the web (4) of the one longitudinal member (2) and the web (4) of the other longitudinal member (2) are identical in construction.

3. Supporting frame according to Claim 1 or 2, **characterized in that** the chords (3) and/or the struts (4) have an L-shaped cross section.

4. Supporting frame according to one of Claims 1 to 3, **characterized in that** the chords (3) and/or the struts (4) and/or the cross members (6) are designed as folded sheet-metal shaped parts.

5. Supporting frame according to one of Claims 1 to 4, **characterized in that** a supporting arm (14) is formed at at least one of the ends of at least one of the cross members (6o), which supporting arm is supported laterally on the web (4) and projects over the respective longitudinal member (2) between the chords (3) in the longitudinal direction of the cross member (60).

6. Supporting frame according to Claim 5, **characterized in that** the supporting arm (14) is supported on the web (4) in such a manner that it is supported on the web (4) via shearing forces in the event of a vertical load.

7. Supporting frame according to Claim 5 or 6, **characterized in that** the supporting arm (14) is produced integrally with the cross member (3o).

8. Supporting frame according to one of Claims 5 to 7, **characterized in that** two adjacent supporting arms (14) of two adjacent cross members (3o) support a bracket (15) which serves to secure a unit or the like of the vehicle.

9. Supporting frame according to one of Claims 1 to 8, **characterized in that** two adjacent stiffening sections (5) are at a relatively small longitudinal distance (11) from each other in the longitudinal direction, the two stiffening sections (5) being of mirror-symmetrical design with respect to a vertical transverse plane.

10. Supporting frame according to Claim 9, **characterized in that** the longitudinal distance (11) of the two stiffening sections (5) is smaller than a transverse distance (12), as measured in the transverse direction, between the longitudinal members (2) or is smaller than a vertical distance (13), as measured in the vertical direction, between top chord (30) and bottom chord (3u) of one of the longitudinal members (2).

## Revendications

1. Cadre portant pour un véhicule, notamment un utilitaire
- avec deux longerons (2) qui sont reliés entre eux par au moins une traverse (6) et qui sont constitués chacun d'une membrure supérieure (3o) et d'une membrure inférieure (3u) et d'au moins une entretoise verticale (4) reliant la membrure supérieure (3a) et le membrure inférieure (3u),
- au moins un tronçon longitudinal du cadre portant (1) étant conçu en tant que tronçon de renfort (5), auquel sont associés deux entretoises (4) et deux traverses (6), à savoir une traverse supérieure (60) et une traverse inférieure (6u),
- la traverse supérieure (60) étant reliée d'une part avec la membrure supérieure (30) et l'entretoise (4) de l'un des longerons (2) et d'autre part avec la membrure supérieure (30) et l'entretoise (4) de l'autre longeron (2),
- la traverse inférieure (6u) étant reliée d'une part avec la membrure inférieure (3u) et l'entretoise (4) de l'un des longerons (2) et d'autre part avec la membrure inférieure (3u) et l'entretoise (4) de l'autre longeron (2),
**caractérisé en ce que**
- la traverse (6) a une section transversale en forme de L,
- dans la zone de ses extrémités, la traverse (6) présente des premiers tronçons de liaison (7) saillant à la transversale, par l'intermédiaire desquels la traverse (6) est montée sur l'entretoise (4) concernée et sur la membrure (3) respective,
- dans la zone de ses extrémités, la traverse (6) présente des deuxièmes tronçons de liaison (8) saillant à la transversale, par l'intermédiaire desquels la traverse (6) est montée sur l'entretoise (4) concernée.

2. Cadre portant selon la revendication 1,
**caractérisé en ce que** la membrure supérieure (3o) de l'un des longerons (2), la membrure inférieure (3u) de l'un des longerons (2), la membrure supérieure (3o) de l'autre longeron et la membrure inférieure (3u) de l'autre longeron (2) sont de construction identique, **en ce que** dans le tronçon de renfort (5) la traverse supérieure (60) et la traverse inférieure (6u) sont de construction identique et **en ce que** dans le tronçon de renfort (5), l'entretoise (4) de l'un des longerons (2) et l'entretoise (4) de l'autre longeron (2) sont de construction identique.

3. Cadre portant selon la revendication 1 ou 2,
**caractérisé en ce que** les membrures (3) et/ou les traverses (4) ont une section transversale en forme de L.

4. Cadre portant selon l'une quelconque des revendications 1 à 3,
**caractérisé en ce que** les membrures (3) et/ou les entretoises (4) et/ou les traverses (6) sont conçus en tant qu'éléments chanfreinés moulés en tôle.

5. Cadre portant selon l'une quelconque des revendications 1 à 4, **caractérisé en ce que** sur au moins l'une des traverses (6o), un bras support (14) qui s'appuie latéralement sur l'entretoise (4) est conçu sur au moins l'une de ses extrémités et déborde par-dessus le longeron (2) concerné, en direction longitudinale de la traverse (6o), entre les membrures (3).

6. Cadre portant selon la revendication 5,
**caractérisé en ce que** le bras support (14) s'appuie sur l'entretoise (4) de façon telle que sous une charge verticale il s'appuie sur l'entretoise (4) par l'intermédiaire d'efforts de cisaillement.

7. Cadre portant selon la revendication 5 ou 6,
**caractérisé en ce que** le bras support (14) est fabriqué en monobloc avec la traverse (30).

8. Cadre portant selon l'une quelconque des revendications 5 à 7, **caractérisé en ce que** deux bras supports voisins (14) de deux traverses voisines (30) supportent une console (15) destinée à fixer un agrégat ou similaire du véhicule.

9. Cadre portant selon l'une quelconque des revendications 1 à 8,
**caractérisé en ce que** deux tronçons de renfort voisins (5) présentent en direction longitudinale une distance longitudinale mutuelle relativement faible (11), les deux tronçons de renfort (5) étant conçus en symétrie spéculaire par rapport à un plan transversal vertical.

10. Cadre portant selon la revendication 9,
**caractérisé en ce que**
la distance longitudinale (11) entre les deux tronçons de renfort (5) est inférieure à la distance transversale (12) mesurée en direction transversale entre les longerons (2) ou est inférieure à une distance verticale (13) mesurée en direction verticale entre la membrure supérieure (3o) et la membrure inférieure (3u) de l'une des longerons (2).
